# EUROPÄISCHE PATENTSCHRIFT

(11) **EP 2 994 260 B1**
(45) Veröffentlichungstag und Bekanntmachung des Hinweises auf die Patenterteilung: **24.10.2018**
(21) Anmeldenummer: 14726897.3
(22) Anmeldetag: 07.05.2014
(51) Int. Cl.: B23B 51/04

(54) **WERKZEUG ZUM SPANENDEN BEARBEITEN EINES WERKSTÜCKS**
TOOL FOR MACHINE-CUTTING A WORKPIECE
OUTIL D'USINAGE DE PIÈCES PAR ENLÈVEMENT DE MATIÈRE

(30) Priorität: 08.05.2013 DE 202013004309 U
(43) Veröffentlichungstag der Anmeldung: 16.03.2016
(73) Patentinhaber: kwb Germany GmbH, 28816 Stuhr (DE)
(72) Erfinder: BRAND, Gerrit, 28816 Stuhr (DE); BÖTTCHER, Torsten, 28816 Stuhr (DE)
(74) Vertreter: Eisenführ Speiser
(86) Internationale Anmeldenummer: PCT/EP2014/059383
(87) Internationale Veröffentlichungsnummer: WO 2014/180925

(56) Entgegenhaltungen:
- BE-A- 471 563
- DE-U- 7 128 472
- GB-A- 2 479 389
- US-A- 3 709 627
- US-A- 5 803 677
- US-A1- 2011 217 133

## Beschreibung

Die vorliegende Erfindung betrifft ein Werkzeug zum spanenden Bearbeiten eines Werkstücks, mit einem Befestigungsmittel zum Befestigen des Werkzeugs in einer rotierend angetriebenen Werkzeugspindel einer Werkzeugmaschine, einem mindestens teilweise um eine Werkzeugmittelachse umlaufenden Werkzeugmantel, und einer mindestens teilweise um die Werkzeugmittelachse umlaufenden Verzahnung, welche an der dem Befestigungsmittel abgewandten Seite des Werkzeugmantels angeordnet ist, wobei das Werkzeug mehrere Ausnehmungen aufweist, welche sich von der Verzahnung bis in den Werkzeugmantel erstrecken.
Derartige Werkzeuge werden verwendet, um großkalibrige Bohrungen in Metall-, Gips- oder Holzplatten zu erzeugen. Der Durchmesser solcher großkalibrigen Bohrungen ist dabei ausreichend, um Rohr- oder Kabeldurchführungen oder Ausnehmungen für Steckdosen oder Leuchten- Schalter und Verteilerdosen zu realisieren.
Durch das Befestigungsmittel wird die Rotationsbewegung der Werkzeugspindel auf den Werkzeugmantel und die Verzahnung übertragen, sodass Bohrungen mit dem Durchmesser der umlaufenden Verzahnung in das zu bearbeitende Werkstück eingebracht werden können. Die maximale Tiefe des zu bearbeitenden Werkstücks ergibt sich aus der Höhe des Werkzeugmantels, sodass die Stärke der zu erarbeitenden Ausnehmung nicht größer als die Höhe des Werkzeugmantels sein darf.
Die im Wesentlichen geschlossenen Werkzeugmäntel der bekannten Werkzeuge führen dazu, dass der am Werkstück abgetragene Span nicht effektiv abtransportiert werden kann und somit das Säge- bzw. Schneidergebnis sowie die Bearbeitungsdauer negativ beeinflusst wird. Ferner kommt es durch die nicht-abgefahrenen Späne zu einer erhöhten Reibarbeit innerhalb des Bearbeitungsbereichs zwischen Werkstück, Span und Werkzeug. Die sich daraus ergebende erhöhte mechanische Belastung am Werkzeug sowie die resultierende Temperaturerhöhung, insbesondere an der Verzahnung des Werkzeugs führt zu einer reduzierten Lebensdauer des Werkzeugs und macht dieses darüber hinaus anfällig für einen Funktionsausfall.

Bei bekannten Werkzeugen dieser Art kommt es aufgrund der unzureichenden Spanabfuhr im Bereich der Verzahnung außerdem oft zu einem übermäßig raschen Abtragen der Verzahnungskontur sowie zu Beschädigungen und Brüchen einzelner Zähne der Verzahnung.
Aus US 5,803,677 A, US 2011/0217133 A1 und BE 471563 A sind Lochsägen bekannt, welche an einer um eine Werkzeugmittelachse herum verlaufenden Mantelfläche eine Verzahnung aufweisen. Zudem sind in der Mantelfläche mehrere sich von der Verzahnung aus zum oberen Ende des Werkzeuges erstreckende Ausnehmungen für eine verbesserte Spanabfuhr ausgebildet.

GB 2479389 A offenbart ein Werkzeug mit den Merkmalen des Oberbegriffs von Anspruch 1.

Die der Erfindung zugrunde liegende Aufgabe ist also darin zu sehen, ein Werkzeug zum spanenden Bearbeiten eines Werkstücks zur Erzeugung einer zylindrischen Ausnehmung anzugeben, welches eine verbesserte Spanabfuhr aufweist und dessen Handhabung zudem vereinfacht ist.

Die Aufgabe wird durch ein Werkzeug mit den Merkmalen des Anspruchs 1 gelöst.

Diese die Verzahnung unterbrechenden und in den Werkzeugmantel hineinragenden Ausnehmungen erlauben es, den bei der Bearbeitung des Werkstücks angefallenen Span effektiver und schneller aus dem Bearbeitungsbereich abzutragen, sodass die mechanische Belastung des Werkzeugs, die Reibarbeit und somit auch die Temperaturentwicklung während dem Bearbeiten von Werkstücken reduziert sind. Gerade durch die Unterbrechung der Verzahnung kann der Span unmittelbar nach dem Abtragen vom Werkstück von der Ausnehmung des Werkzeugs aufgenommen werden und in Richtung der sich in den Werkzeugmantel erstreckenden Ausnehmung abtransportiert werden. Dies führt zu einer besseren Handhabbarkeit des Werkzeugs. Mittels der Rasteinrichtung können Werkzeugmantel und Trägerelement einerseits schnell und problemlos voneinander getrennt werden und andererseits kann eine mindestens in eine Rotationsbewegung verdreh-sichere Verbindung zwischen diesen beiden Komponenten erzeugt werden, sodass ein Lösen dieser Verbindung während des Bearbeitungsprozesses verhindert ist.

Vorzugsweise stimmt dabei die Rotationsachse mit der Werkzeugmittelachse in bekannter Weise überein. Der um die Werkzeugmittelachse umlaufende Werkzeugmantel sowie die um die Werkzeugmittelachse umlaufende Verzahnung sind dabei im Wesentlich zylindrisch ausgebildet.

In einer ersten bevorzugten Ausführungsform des Werkzeugs erstrecken sich die Ausnehmungen über die gesamte Stärke der Verzahnung und/oder über die gesamte Stärke des Werkzeugmantels. Diese vollständigen Materialausnehmungen an der Verzahnung und am Werkzeugmantel erhöhen die Spanaufnahmekapazität der einzelnen Ausnehmungen erheblich. Außerdem kann durch eine derartige Ausnehmung ein erhöhter Luftstrom im Bearbeitungsbereich erzeugt werden, sodass der erzeugte Kühlluftstrom eine Kühlung der Verzahnung und des Werkzeugmantels bedingt und die Temperaturentwicklung positiv beeinflusst wird. Dies führt unter anderem zu einer erhöhten Lebensdauer und einer höheren Belastbarkeit des Werkzeugs. Weitere Vorteile sind ein leichteres Arbeiten, geringerer Kraftaufwand und damit geringerer Strombedarf und somit besonders bei Akkugeräten eine längere Lebensdauer der Akkus.

In einer zweiten bevorzugten Ausführungsform des erfindungsgemäßen Werkzeugs weisen die Ausnehmungen eine im Wesentlichen konstante Breite auf und/oder weisen an der dem Befestigungsmittel zugewandten Seite eine als Halbkreis ausgebildete Abschlusskante auf. Durch das Vorsehen von Ausnehmungen konstanter Breite sowie durch abgerundete Seitenkanten wird die Kerbwirkung reduziert, sodass Spannungsspitzen im Werkzeugmantel vermieden werden und das Risiko eines unerwünschten Ausfalls verringert wird.

In einer besonders bevorzugten Ausführungsform des erfindungsgemäßen Werkzeugs verlaufen die sich in den Werkzeugmantel erstreckenden Seitenkanten der Ausnehmungen nicht parallel zu der Rotationsachse. Vorzugsweise verlaufen die Seitenkanten der Ausnehmungen in einem Winkel von 0° bis 90°, besonders bevorzugt 5° bis 45° geneigt gegenüber der Rotationsachse. Da der Span beim Abtragen vom Werkstück in Richtung der Rotation beschleunigt wird, gelingt ein besonders effektives Abtragen des Spans durch geneigte Ausnehmungen, die der rotatorischen Beschleunigung der abgetragenen Späne Rechnung tragen. Der ideale Neigungswinkel der Ausnehmungen ist unter anderem abhängig von dem zu bearbeitenden Werkstück, dem Verzahnungsdurchmesser, der Verzahnungsgeometrie und der Drehzahl, mit welcher das Werkzeug betrieben wird.

In einer weiteren bevorzugten Ausführungsform des erfindungsgemäßen Werkzeugs sind die Ausnehmungen gegenüber einer Symmetrieachse spiegelsymmetrisch ausgebildet und die Symmetrieachse verläuft nicht parallel zu der Rotationsachse. Vorzugsweise verläuft die Symmetrieachse in einem Winkel von 0° bis 90°, besonders bevorzugt 5° bis 45° geneigt gegenüber der Rotationsachse. Mittels der geneigten spiegelsymmetrischen Ausbildung der Ausnehmungen kann das Werkzeug besonders kostengünstig bzw. wirtschaftlich hergestellt werden. Derartige Ausnehmungen können besonders vorteilhaft durch Stanzen oder bei höheren Materialstärken durch das Bearbeiten mittels eines Fingerfräsers erzeugt werden.

Das erfindungsgemäße Werkzeug wird dadurch besonders vorteilhaft weitergebildet, dass die Ausnehmungen sich mindestens bis über die Hälfte der Werkzeugmantelhöhe und/oder mindestens etwa 5 mm über die Hälfte der Werkzeugmantelhöhe (28) erstrecken. Dies erlaubt die Abfuhr der abgetragenen Späne aus dem Bearbeitungsbereich, auch wenn das Werkzeug bereits tief in das zu bearbeitende Werkstück eingetaucht ist. Eine Ansammlung der abgetragenen Späne innerhalb der Ausnehmungen wird somit verhindert. Eine effektive Spanabfuhr wird somit also auch gewährleistet, wenn das Werkzeug zum Erzeugen von Bohrungen maximaler Tiefe Verwendung findet.

In einer weiteren bevorzugten Ausführungsform des erfindungsgemäßen Werkzeugs weisen die Verzahnung und der Werkzeugmantel den gleichen Durchmesser auf. Hierdurch wird eine zusätzliche Kante zwischen der Verzahnung und dem Werkzeugmantel vermieden, sodass die Kerbwirkung weiter reduziert ist und die Lebensdauer sowie die mechanische Belastbarkeit des Werkzeugs weiter erhöht sind.

Ferner wird das erfindungsgemäße Werkzeug dadurch vorteilhaft weitergebildet, dass das Trägerelement an der zweiten Seite mehrere zylindrische Nuten unterschiedlichen und/oder gleichen Durchmessers aufweist. In derartigen Nuten ist der Werkzeugmantel anordenbar, sodass mit einem Werkzeug, welches ein derartiges Trägerelement aufweist, Bohrungen verschiedenen Durchmessers erzeugt werden können. Ferner ist es ebenfalls möglich, einzelne Mantelabschnitte in die Nuten gleichen Durchmessers einzusetzen. Das Werkzeug wird durch diese Weiterbildung teilweise modularisiert, sodass der Anwendungsbereich und die Funktionalität für den Anwender erweitert sind. Ferner kann ein beschädigter Werkzeugmantel in einer derartigen Ausführungsform kostengünstig und einfach ausgetauscht bzw. ersetzt werden.

Besonders bevorzugt ist ferner eine Trägerelement/Werkzeugmantel-Kombination, welche mehrere Rasteinrichtungen zum lösbaren Verbinden aufweist.

In einer weiteren bevorzugten Ausführungsform weist das erfindungsgemäße Werkzeug eine Zentriereinrichtung auf, welche vorzugsweise als Bohrer ausgebildet ist und sich vorzugsweise von dem Trägerelement bis über die Verzahnung hinaus erstreckt. Da die eingangs genannten großkalibrigen Bohrungen beispielweise für Schächte oder Kanäle oft genau positioniert und/oder an Markierungen ausgerichtet werden müssen, steigert eine Zentriereinrichtung die Verwendbarkeit des Werkzeugs in der Praxis in erheblichem Maße. Dadurch, dass die Zentriereinrichtung sich über die Verzahnung hinaus erstreckt, kommt die Zentriereinrichtung bei der Bearbeitung eines Werkstücks vor der Verzahnung mit dem Werkstück in Eingriff. Wird bei weiterem Absenken des Werkzeugs auch die Verzahnung mit dem Werkstück in Eingriff gebracht, so sorgt die Zentriereinrichtung für eine erhöhte Stabilität, sodass ein Abgleiten oder Verrutschen des Werkzeugs beim Inkontaktkommen der Verzahnung mit dem zu bearbeitenden Werkstück verhindert ist. Somit werden also auch die Positionsgenauigkeit und die Maßgenauigkeit der mittels des Werkzeugs erzeugten großkalibrigen Bohrungen verbessert.
In einer weiteren bevorzugten Ausführungsform sind das Trägerelement und der Werkzeugmantel nicht werkzeuglos voneinander lösbar verbunden. Dadurch, dass die Verbindung zwischen dem Trägerelement und dem Werkzeugmantel nicht werkzeuglos gelöst werden kann, ist die Betriebssicherheit bei der Verwendung des Werkzeugs erhöht, da ein unbeabsichtigtes Trennen von Trägerelement und Werkzeugmantel verhindert ist.
In einer weiteren bevorzugten Ausführungsform des erfindungsgemäßen Werkzeugs ist die um die Werkzeugmittelachse umlaufende Verzahnung nicht geschlossen oder weist eine sich über die gesamte Mantelhöhe und Verzahnung erstreckende Unterbrechung auf.
In einer weiteren bevorzugten Ausführungsform des erfindungsgemäßen Werkzeugs ist der Werkzeugmantel und/oder die Verzahnung aus gehärteten Stahl und/oder Diamantbestreut und/oder Hartmetall-bestreut ausgebildet. Eine Härtung des Materials sowie die Bestreuung mit Diamantstaub oder Hartmetallstaub erhöht ebenfalls die mechanische Belastbarkeit und führt somit zu einer längeren Lebensdauer und höheren Robustheit des Werkzeugs.

Die Erfindung wird nachfolgend anhand der Figuren und Beispiele näher beschrieben, ohne dass diese den Schutzbereich der Schutzansprüche beschränken sollen. Es stellen dar:
- Fig. 1: ein Beispiel eines Werkzeugs im Eingriff mit einem Werkstück in der Seitenansicht;
- Fig. 2: ein Beispiel eines Werkzeugs in einer perspektivischen Darstellung; und
- Fig. 3: einen Werkzeugmantel einer Ausführungsform des erfindungsgemäßen Werkzeugs in einer perspektivischen Darstellung.

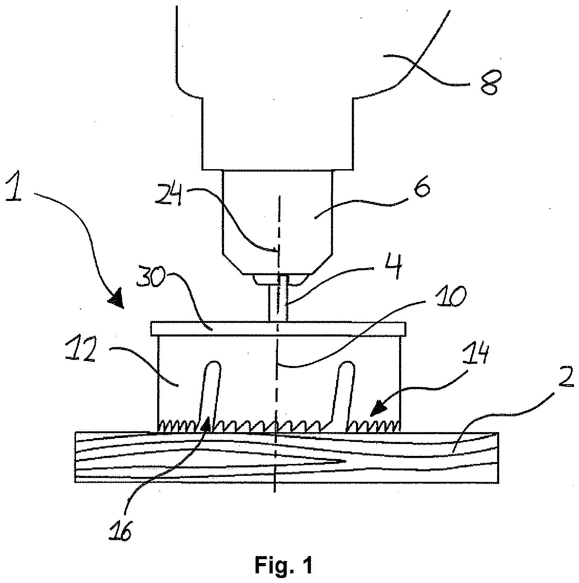

Gemäß dem in Fig. 1 dargestellten Beispiel ist das Werkzeug 1 in einer rotierend angetriebenen Werkzeugspindel 6 einer Werkzeugmaschine 8 eingespannt, sodass dadurch eine kraftschlüssige und/oder formschlüssige Verbindung zwischen der Werkzeugspindel 6 der Werkzeugmaschine 8 und dem Befestigungsmittel 4 des Werkzeugs 1 die Rotationsbewegung der Werkzeugspindel 6 auf das Werkzeug 1 übertragen werden kann.
Dabei stimmt die Werkzeugmittelachse 10 mit der Rotationsachse 24 der rotierend angetriebenen Werkzeugspindel 6 überein. Das Befestigungsmittel 4 ist ferner mit dem Trägerelement 30 verbunden, in welches wiederum der Werkzeugmantel zumindest in eine Rotationsrichtung verdreh-sicher eingerastet ist.
An der dem Trägerelement 30 und dem Befestigungsmittel 4 abgewandten Seite des Werkzeugmantels 12 ist die Verzahnung 14 angeordnet. Die Verzahnung 14 und der Werkzeugmantel 12 weisen Ausnehmungen 16 auf, welche sich von der Verzahnung 14 bis über die Hälfte der Werkzeugmantelhöhe erstrecken.
Die durch die Ausnehmungen 16 unterbrochene Verzahnung 14 ist in Kontakt mit dem Werkstück 2. Durch die Rotationsbewegung der Verzahnung 14 um die Werkzeugmittelachse 10 und Rotationsachse 24 kann somit eine großkalibrige Bohrung in dem Werkstück 2 spanend erzeugt werden.

Der Werkzeugmantel 12 ist in dem dargestellten Beispiel werkzeuglos von dem Trägerelement 30 lösbar bzw. trennbar. Das Trägerelement 30 weist an der dem Befestigungsmittel 4 abgewandten Stirnseite mehrere Nuten verschiedenen Durchmessers auf, in welche der Werkzeugmantel mittels Rasteinrichtungen 34a, 34b (nicht dargestellt) verrastbar ist.

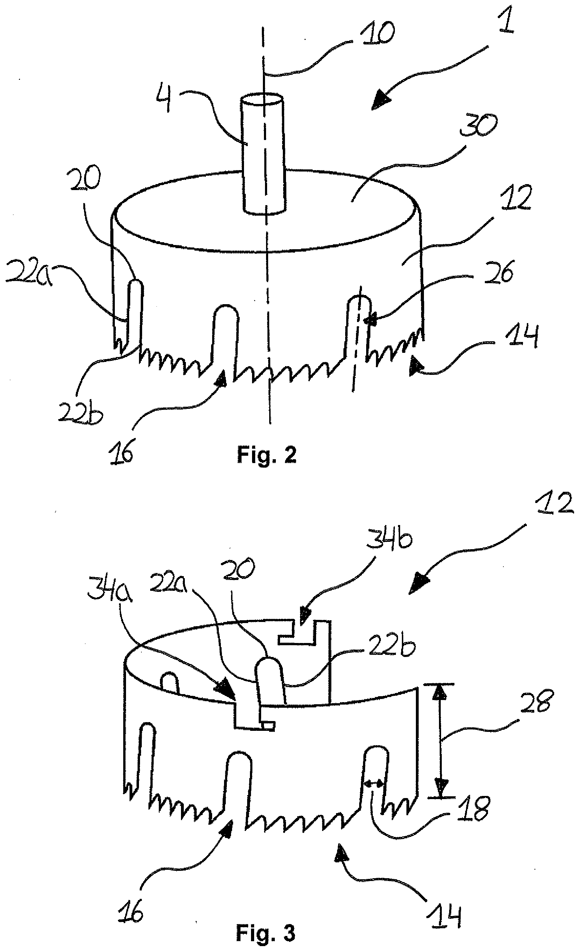

Die perspektivische Darstellung in Fig. 2 zeigt ein Beispiel eines Werkzeugs ohne Werkzeugmaschine. Das zylindrisch ausgebildete Befestigungsmittel weist eine glatte Oberfläche auf. Die Verspannung des Befestigungsmittels 4 des dargestellten Werkzeugs 1 in eine Werkzeugspindel einer Werkzeugmaschine erfolgt folglich kraftschlüssig. Das an der der Werkzeugmaschine abgewandten Seite des Befestigungsmittels 4 angeordnete Trägerelement 30 ist derart mit dem Werkzeugmantel 12 verbunden, dass diese Verbindung nicht werkzeuglos gelöst werden kann.
Der Werkzeugmantel 12 weist Ausnehmungen 16 auf, deren Seitenkanten 22a, 22b nicht parallel, sondern geneigt gegenüber der Werkzeugmittelachse 10 ausgerichtet sind. Ferner weisen die Ausnehmungen 16 halbkreisförmige Abschlusskanten 20 auf. Außerdem sind die Ausnehmungen 16 gegenüber einer Symmetrieachse 26 symmetrisch ausgebildet und weisen eine konstante Breite 18 auf. Die Ausnehmungen 16 unterbrechen die Verzahnung 14 und ragen bis über die Hälfte der Mantelhöhe hinaus in Richtung des Trägerelements 30 in den Werkzeugmantel 12.
Fig. 3 zeigt einen Werkzeugmantel 12, welcher von einem erfindungsgemäßen Werkzeug separiert wurde. Mittels der Rasteinrichtungen 34a, 34b ist der Werkzeugmantel 12 derart mit dem Trägerelement verbindbar, dass ein Verdrehen des Werkzeugmantels 12 gegenüber dem Trägerelement 30 zumindest in eine Rotationsrichtung verhindert ist. Die Rasteinrichtungen 34a und 34b sind als Ausnehmungen ausgebildet, welche einen dreiseitig von Werkzeugmantelmaterial umgebenden und parallel zu der Verzahnung 14 angeordneten Schlitz aufweisen. Die geneigten Ausnehmungen 16 weisen eine konstante Breite 18 auf und ragen bis über die Hälfte der Werkzeugmantelhöhe 28 in den Werkzeugmantel 12 hinein und schließen mit einer halbkreisförmig ausgebildeten Abschlusskante 20 ab.

## Patentansprüche

1. Werkzeug (1) zum spanenden Bearbeiten eines Werkstücks (2), mit
einem Befestigungsmittel (4) zum Befestigen des Werkzeugs (1) in einer rotierend angetriebenen Werkzeugspindel (6) einer Werkzeugmaschine (8),
einem mindestens teilweise um eine Werkzeugmittelachse (10) umlaufenden Werkzeugmantel (12), und
einer mindestens teilweise um die Werkzeugmittelachse (10) umlaufenden Verzahnung (14), welche an der dem Befestigungsmittel (4) abgewandten Seite des Werkzeugmantels (12) angeordnet ist, wobei das Werkzeug (1) mehrere Ausnehmungen (16) aufweist, welche sich von der Verzahnung (14) bis in den Werkzeugmantel (12) erstrecken, wobei der um die Werkzeugmittelachse (10) umlaufende Werkzeugmantel (12) nicht geschlossen ist oder eine Unterbrechung aufweist, und mit einem Trägerelement (30), auf welchem an einer ersten Seite das Befestigungsmittel (4) angeordnet ist und an einer zweiten Seite der Werkzeugmantel (12) angeordnet ist, **dadurch gekennzeichnet, dass** der Werkzeugmantel (12) und/oder das Trägerelement (30) mindestens eine, vorzugsweise mehrere Rasteinrichtungen (34a, 34b) zum lösbaren Verbinden des Werkzeugmantels (12) mit dem Trägerelement (30) aufweist.

2. Werkzeug (1) nach Anspruch 1,
**dadurch gekennzeichnet, dass** die Ausnehmungen (16) sich über die gesamte Stärke der Verzahnung (14) und/oder die gesamte Stärke des Werkzeugmantels (12) erstrecken.

3. Werkzeug (1) nach Anspruch 1 oder 2,
**dadurch gekennzeichnet, dass** die Ausnehmungen (16) eine im Wesentlichen konstante Breite (18) aufweisen und/oder an der dem Befestigungsmittel (4) zugewandten Seite eine als Halbkreis ausgebildete Abschlusskante (20) aufweisen.

4. Werkzeug (1) nach einem der vorstehenden Ansprüche,
**dadurch gekennzeichnet, dass** die sich in den Werkzeugmantel (12) erstreckenden Seitenkanten (22a, 22b) der Ausnehmungen (16) nicht parallel zu der Rotationsachse (24), vorzugsweise in einem Winkel von 5 bis 45 Grad geneigt gegenüber der Rotationsachse (24) verlaufen.

5. Werkzeug (1) nach einem der vorstehenden Ansprüche,
**dadurch gekennzeichnet, dass** die Ausnehmungen (16) gegenüber einer Symmetrieachse (26) spiegelsymmetrisch ausgebildet sind und die Symmetrieachse (26) nicht parallel zu der Rotationsachse (24), vorzugsweise in einem Winkel von 5 bis 45 Grad geneigt gegenüber der Rotationsachse (24) verläuft.

6. Werkzeug (1) nach einem der vorstehenden Ansprüche,
**dadurch gekennzeichnet, dass** die Ausnehmungen (16) sich mindestens bis über die Hälfte der Werkzeugmantelhöhe (28) und/oder mindestens etwa 5 mm über die Hälfte der Werkzeugmantelhöhe (28) erstrecken.

7. Werkzeug (1) nach einem der vorstehenden Ansprüche,
**dadurch gekennzeichnet, dass** die Verzahnung (14) und der Werkzeugmantel (12) den gleichen Durchmesser aufweisen.

8. Werkzeug (1) nach einem der vorstehenden Ansprüche,
**dadurch gekennzeichnet, dass** das Trägerelement (30) an der zweiten Seite mehrere zylindrische Nuten unterschiedlichen und/oder gleichen Durchmessers aufweist.

9. Werkzeug (1) nach einem der vorstehenden Ansprüche,
**gekennzeichnet durch** eine Zentriereinrichtung, welche vorzugsweise als Bohrer ausgebildet ist und sich vorzugsweise mindestens von dem Trägerelement (30) bis über die Verzahnung (14) hinaus erstreckt.

10. Werkzeug (1) nach einem der vorstehenden Ansprüche,
**dadurch gekennzeichnet, dass** das Trägerelement (30) und der Werkzeugmantel (12) nicht werkzeuglos voneinander lösbar verbunden ausgebildet sind.

11. Werkzeug (1) nach einem der vorstehenden Ansprüche,
**dadurch gekennzeichnet, dass** die um die Werkzeugmittelachse (10) umlaufende Verzahnung (14) nicht geschlossen ist oder eine Unterbrechung aufweist.

12. Werkzeug (1) nach einem der vorstehenden Ansprüche,
**dadurch gekennzeichnet, dass** die Verzahnung (14) direkt an dem Werkzeugmantel (12) ausgebildet ist.

13. Werkzeug (1) nach einem der vorstehenden Ansprüche,
**dadurch gekennzeichnet, dass** der Werkzeugmantel (12) und/oder die Verzahnung (14) aus gehärtetem Stahl und/oder diamantbestreut und/oder hartmetallbestreut ausgebildet sind.

## Claims

1. Tool (1) for machining a workpiece (2), having
a fixing means (4) for fixing the tool (1) in a rotary-driven tool spindle (6) of a machine tool (8),
a tool cover (12) which surrounds a tool central axis (10) at least partially, and toothing (14) which surrounds the tool central axis (10) at least partially and is disposed on the side of the tool cover (12) which is orientated away from the fixing means (4), the tool (1) having a plurality of recesses (16) which extend from the toothing (14) as far as into the tool cover (12),
the tool cover (12) which surrounds the tool central axis (10) not being closed or having a gap,
and having a carrier element (30) on which, on a first side, the fixing means (4) is disposed and, on a second side, the tool cover (12) is disposed,
**characterised in that**
the tool cover (12) and/or the carrier element (30) has at least one, preferably a plurality of locking devices (34a, 34b) for detachable connection of the tool cover (12) to the carrier element (30).

2. Tool (1) according to claim 1,
**characterised in that** the recesses (16) extend over the entire thickness of the toothing (14) and/or the entire thickness of the tool cover (12).

3. Tool (1) according to claim 1 or 2,
**characterised in that** the recesses (16) have an essentially constant width (18) and/or, on the side orientated towards the fixing means (4), have an end edge (20) configured as semicircle.

4. Tool (1) according to one of the preceding claims,
**characterised in that** the side edges (22a, 22b) of the recesses (16) which extend into the tool cover (12) do not extend parallel to the axis of rotation (24), preferably inclined at an angle of 5 to 45 degrees relative to the axis of rotation (24).

5. Tool (1) according to one of the preceding claims,
**characterised in that** the recesses (16) have a mirror-symmetrical configuration relative to an axis of symmetry (26) and the axis of symmetry (26) does not extend parallel to the axis of rotation (24), preferably inclined at an angle of 5 to 45 degrees relative to the axis of rotation (24).

6. Tool (1) according to one of the preceding claims,
characterised that in the recesses (16) extend at least as far as over half of the tool cover height (28) and/or at least approximately 5 mm over half the tool cover height (28).

7. Tool (1) according to one of the preceding claims,
**characterised in that** the toothing (14) and the tool cover (12) have the same diameter.

8. Tool (1) according to one of the preceding claims,
**characterised in that** the carrier element (30), on the second side, has a plurality of cylindrical grooves of different and/or the same diameter.

9. Tool (1) according to one of the preceding claims,
**characterised by** a centring device which is configured preferably as a drill and extends preferably at least from the carrier element (30) as far as beyond the toothing (14).

10. Tool (1) according to one of the preceding claims,
**characterised in that** the carrier element (30) and the tool cover (12) are configured not connected detachably from each other without the tool.

11. Tool (1) according to one of the preceding claims,
**characterised in that** the toothing (14) which surrounds the tool central axis (10) is not closed or has a gap.

12. Tool (1) according to one of the preceding claims,
**characterised in that** the toothing (14) is configured directly on the tool cover (12).

13. Tool (1) according to one of the preceding claims,
**characterised in that** the tool cover (12) and/or the toothing (14) are formed from hardened steel and/or are studded with diamonds and/or studded with hard metal.

## Revendications

1. Outil (1) servant à usiner par enlèvement de copeaux une pièce (2), avec
un moyen de fixation (4) servant à fixer l'outil (1) dans une broche porte-outil (6) entraînée en rotation d'une machine-outil (8),
une cloche d'outil (12) tournant au moins en partie autour d'un axe central d'outil (10), et
une denture (14) tournant au moins en partie autour de l'axe central d'outil (10), laquelle est disposée au niveau du côté, opposé au moyen de fixation (4), de la cloche d'outil (12), dans lequel l'outil (1) présente plusieurs évidements (16), qui s'étendent depuis la denture (14) jusque dans la cloche d'outil (12),
dans lequel
la cloche d'outil (12) tournant autour de l'axe central d'outil (10) n'est pas fermée ou présente une interruption,
et avec un élément porteur (30), sur lequel l'élément de fixation (4) est disposé au niveau d'un premier côté et la cloche d'outil (12) est disposée au niveau d'un deuxième côté,
**caractérisé en ce que**
la cloche d'outil (12) et/ou l'élément porteur (30) présente un, de préférence plusieurs, dispositif(s) d'enclenchement (34a, 34b) servant à relier de manière amovible la cloche d'outil (12) à l'élément porteur (30) .

2. Outil (1) selon la revendication 1,
**caractérisé en ce que** les évidements (16) s'étendent sur l'ensemble de l'épaisseur de la denture (14) et/ou l'ensemble de l'épaisseur de la cloche d'outil (12).

3. Outil (1) selon la revendication 1 ou 2,
**caractérisé en ce que** les évidements (16) présentent une largeur (18) sensiblement constante et/ou présentent, au niveau du côté tourné vers le moyen de fixation (4), une arête de terminaison (20) réalisée sous la forme d'un demi-cercle.

4. Outil (1) selon l'une quelconque des revendications précédentes,
**caractérisé en ce que** les arêtes latérales (22a, 22b), s'étendant dans la cloche d'outil (12), des évidements (16) ne s'étendent pas de manière parallèle par rapport à l'axe de rotation (24), de préférence de manière inclinée selon un angle allant de 5 à 45 degrés par rapport à l'axe de rotation (24).

5. Outil (1) selon l'une quelconque des revendications précédentes,
**caractérisé en ce que** les évidements (16) sont réalisés de manière symétrique en miroir par rapport à un axe de symétrie (26) et l'axe de symétrie (26) ne s'étend pas de manière parallèle par rapport à l'axe de rotation (24), de préférence de manière inclinée selon un angle allant de 5 à 45 degrés par rapport à l'axe de rotation (24).

6. Outil (1) selon l'une quelconque des revendications précédentes,
**caractérisé en ce que** les évidements (16) s'étendent au moins jusque sur la moitié de la hauteur de cloche d'outil (28) et/ou d'au moins environ 5 mm sur la moitié de la hauteur de cloche d'outil (28).

7. Outil (1) selon l'une quelconque des revendications précédentes,
**caractérisé en ce que** la denture (14) et la cloche d'outil (12) présentent le même diamètre.

8. Outil (1) selon l'une quelconque des revendications précédentes,
**caractérisé en ce que** l'élément porteur (30) présente, au niveau du deuxième côté, plusieurs rainures cylindriques de diamètres différents et/ou identiques.

9. Outil (1) selon l'une quelconque des revendications précédentes,
**caractérisé par** un dispositif de centrage, qui est réalisé sous la forme d'un foret et s'étend de préférence au moins depuis l'élément porteur (30) jusqu'au-delà de la denture (14).

10. Outil (1) selon l'une quelconque des revendications précédentes,
**caractérisé en ce que** l'élément porteur (30) et la cloche d'outil (12) sont réalisés en étant reliés sans pouvoir être détachés l'un de l'autre sans outil.

11. Outil (1) selon l'une quelconque des revendications précédentes,
**caractérisé en ce que** la denture (14) tournant autour de l'axe central d'outil (10) n'est pas fermée ou présente une interruption.

12. Outil (1) selon l'une quelconque des revendications précédentes,
**caractérisé en ce que** la denture (14) est réalisée de manière directe au niveau de la cloche d'outil (12).

13. Outil (1) selon l'une quelconque des revendications précédentes,
**caractérisé en ce que** la cloche d'outil (12) et/ou la denture (14) sont réalisées à partir d'un acier durci et/ou avec des diamants parsemés et/ou du métal dur parsemé.
